# EUROPEAN PATENT APPLICATION

(11) **EP 4 321 855 A1**
(43) Date of publication of application: **14.02.2024**
(21) Application number: 22189382.9
(22) Date of filing: 09.08.2022
(51) Int. Cl.: G01N 21/25, G01N 21/27, G01N 21/47, G01N 21/51

(54) **DEVICE AND METHOD FOR MEASURING AND CONTROLLING THE EXPOSURE OF A SAMPLE TO LIGHT**

(71) Applicant: Ningaloo Biosystems GmbH, 51105 Köln (DE)
(72) Inventor: Müller-Hartmann, Dr. Herbert, 50937 Köln (DE); Schmidt, Dr. Hanns-Martin, 50733 Köln (DE)
(74) Representative: Remus, Alvaro Johannes

(57) **Abstract**

The invention relates to a device 15 and related methods, comprising at least one internal space 16 which is designed to hold at least one chemical and/or biological sample or which is designed to comprise at least one container 20 designed to hold at least one chemical and/or biological sample 28, and at least one illumination means 24 for illuminating the chemical and/or biological sample 28 in the internal space 16, wherein the device 15 further comprises or is provided with at least one light metering unit 26 being designed to measure an intensity of light that has passed through and/or is scattered by the chemical and/or biological sample 28 in the internal space 16. It is an advantage of the device 15 that the light metering unit 26 is a kind of detection device to detect light exposure of the chemical and/or biological sample 28 during the process of illumination (e.g., optogenetic control, photoactivation or photocatalysis), preferably in real-time, so as to effectively control illumination of the sample 28.

## Description

### Field of the invention

The invention relates to a device comprising at least one internal space which is designed to hold at least one chemical and/or biological sample or which is designed to comprise at least one container designed to hold at least one chemical and/or biological sample, and at least one illumination means for illuminating the chemical and/or biological sample in the internal space. The invention further relates to a method for controlling an exposure of at least one chemical and/or biological sample to light, wherein the sample is arranged in an internal space of an illumination device and illuminated by at least one illumination means emitting light comprising at least one biologically and/or chemically active wavelength, and a method for calibrating an optogenetic illumination device comprising at least one illumination means.

### Background of the invention

Optogenetics is a technology combining the use of light and genetically encoded light-sensitive proteins to control the behavior of living cells and organisms or biochemical processes. Optogenetic technology is increasingly applied in many laboratories around the world and has become a booming field thanks to several technological developments. For example, the search for and combination of functional domains to create novel light-sensitive photoswitches capable of controlling particular cellular behaviors has yielded a diverse set of tools with different functionalities [1,2]. However, although progress in the light-delivery technologies, particularly at the microscopic level, has enabled unprecedented control over in vitro and in vivo processes through illumination, standardized and useful laboratory or biomanufacturing equipment for employing this promising technology in broader cell-culture based applications is still not available in the market. While to date self-made devices dominate the laboratory landscape, there is an increasing need for technically mature and user-optimized laboratory equipment for employing this promising technology in a reproducible and reliable manner.

Olsen et al. (2014) disclose a method for controlling gene expression dynamics with light using a device that contains independently programmable blue, green, red and far-red light-emitting diodes (LEDs) that deliver calibrated intensities of each wavelength to each of 64 standard test tubes. The device allows optical signals to be sent into exponentially growing bacterial cultures in a shaking incubator. To this end, an array of individually controlled LEDs is disposed underneath the test tubes and used to deliver programmed dynamic light inputs to the bacterial cultures therein, wherein each culture tube is optically isolated with an opaque foam [3].

Gerhardt et al. (2016) disclose a device for delivering two independent light signals to each well of a 24-well culture plate, including a printed circuit board (PCB) outfitted with a Secure Digital (SD) card reader, a microcontroller, 3 LED drivers, 48 solder-free LED sockets, a power regulating circuit, and other standard electronics components. A chassis houses the assembled PCB and 24-well plate. The LEDs are arranged on the PCB which is mounted to a mounting plate disposed underneath the 24-well plate. The black-walled 24-well plate has a transparent plastic bottom and is aligned and held in place by a plate adapter. An adhesive foil plate cover provides a sealed environment for each well. Laser cut nitrile gaskets are placed at each of the interfaces above the PCB to reduce optical contamination. A lid is placed atop the plate and the complete assembly is secured with wing nuts [4].

US 2018/0016538 A1 discloses apparatus, systems and methods relating to an illumination opto-plate configured to specifically illuminate the wells of a cell culture plate. The apparatus has a base and a plate adaptor that are configured to be used in conjunction with a 96-well plate or other common culture plates, such as 6-well, 12-well, 24-well, 48-well, 384-well plates. The culture plate is placed atop the adaptor such that various openings defined in the adaptor that correspond to LED fixtures are disposed below corresponding wells on the tissue culture plate. The thin profile of the opto-plate allows for use in an incubator or with a microscope.

Zhao et al. (2018) disclose the use of a light panels set up around small-scale bioreactors to illuminate optogenetically engineered yeast cells and to regulate the cellular metabolism to selectively increase the yields of two types of alcohols. [5].

Steel at al. (2019) disclose an automated experimental platform for biological research (Chi-Bio). In addition to continuous-culturing capabilities (turbidostat functionality, heating, stirring) it incorporates tunable light outputs of varying wavelengths and spectrometry. In addition to an UV LED for sterilization and a 650 nm laser for optical density measurement, a seven-wavelength LED is incorporated for optogenetic actuation or excitation of fluorescence. A chip-based spectrometer can be used to measure fluorescence emission. The device can be used to employ fluorescence measurement for in silico feedback control of the independent optogenetic light input to address the non-linearity of optogenetic fluorescent protein expression [6].

Wong et al. (2018) disclose a scalable do-it-yourself framework that can be configured to carry out high-throughput growth experiments in molecular evolution, systems biology, and microbiology (eVOLVER). The system is equipped with LED/photodiode sensor pairs to perform optical density readings at 900 nm that can be translated into cell density. Additionally, the device can be reconfigured to be equipped with LEDs for optogenetic studies [7].

However, the prior art devices are not designed or equipped for measuring or monitoring the actual exposure of the cell cultures to light. Recording of actual light exposure of the chemical and/or biological samples is thus not realized. Additionally, controlling of illumination is therefore only possible by adjusting the light source beforehand or by using independent parameters such as cell density, without any possibility to adapt the effective illuminance during treatment of the cells. Accordingly, as actual light exposure of the cell cultures is not determined, none of the prior art devices really allows for controlled illumination of the cultures.

### Summary of the invention

It is the object of the invention to provide a device and related methods as initially specified, which allows for controlled illumination of the samples in a reproducible and reliable manner.

The object is achieved by a device as initially specified, further comprising or being provided with at least one light metering unit being designed to measure an intensity of light that has passed through and/or is scattered by the chemical and/or biological sample in the internal space. That is, the intensity with which a sample is actually exposed to light can be determined and monitored, preferably in real-time. The light metering unit thus allows for adjustment of, for example, the luminous flux [Lumen, Im] and/or radiant flux [Watt, W] of the illumination means and hence precise adjustment of light ingress into and/or exposure of the sample(s), for example, by feedback control, preferably in real-time. The feedback control can be a function of the device, the container, or can be accomplished externally, e.g. by a controller of the illumination means. For instance, a change in cell number or concentration in the course of the process, caused e.g. by cell proliferation or media addition, withdrawal or evaporation, can result in altered light distribution in the vessel and thus light exposure of the chemical and/or biological sample itself, which in turn can be detected by the light metering unit. Additionally, the chemical conditions such as pH or dissolved gas concentrations can, through their interactions with components in the chemical and/or biological samples, such as media components or the cells themselves, change the light distribution through absorption changes at specific wavelengths over time. These measurements can then be used to adjust the light intensity emitted by the illumination means to compensate the effects of changing light scattering or transmittance within the sample itself, with particular respect to the specific illumination wavelength employed. Additionally, the measurements can be used to adjust the operating conditions of the illumination means to variations of the effective light intensity emitted by the illumination means, e.g. as a result of aging or environmental factors. It is therefore an advantage of the device according to the invention that the light metering unit is a kind of detection device to detect light exposure of the chemical and/or biological sample during the process of illumination (e.g., optogenetic control, photoactivation or photocatalysis), preferably in real-time, so as to effectively control illumination of the sample.

Since the effective light exposure of the chemical and/or biological samples is influenced by changes of the optical properties of the culture volume harboring the cells at the wavelength of the light used to control the cellular or biochemical processes, it is particularly beneficial to measure the effective light exposure and translate it into adjustments of the light input intensity. These variations of light effectiveness can, for example, be caused by a complex interplay of increasing optical density and light scattering as a result of cell growth, the generation of optically active metabolites, or chemical components inside the medium changing their optical transmittance properties, e.g. as a response to changes in pH or dissolved gas content. In many instances, it is beneficial to induce optogenetic control, photoactivation or photocatalysis not just in an on/off manner, which is qualitatively, but rather quantitatively. Since the intensity of light reaching the reaction volume or cells, respectively, determines the speed of a photochemical reaction or the proportion of photoreactive molecules undergoing a transition, such as a photoactivated state, it can be directly used to quantitatively control the desired outcome. In particular, the outcome of cellular responses using optogenetic control can be quantitatively controlled through the level of overall light exposure of the cells, in particular light exposure time and light exposure intensity [2]. Accordingly, effective light exposure intensity, e.g. of cells equipped with optogenetic photoswitches, is an essential determinator for achieving the desired quantitative effect.

For example, the device according to the invention may comprise or be a vessel, plurality of vessels, container, encasing, box, photoreactor or bioreactor for harboring chemical and/or biological samples. The device is preferably designed to have a light-proof body or other features that convey protection from light. At least one window for observing and/or illuminating the internal space may be disposed in the wall element and/or the light-proof material.

The container may be, for example, a cell culture vessel or components thereof such as multiwell plates, dishes, lids, flasks, culture bags, liners, bioreactors.

The light metering unit is a light detection device designed and/or equipped to measure and/or record the intensity of light to which the chemical and/or biological sample is exposed. A light metering unit according to the invention comprises a light exposure meter designed to detect and measure the amount (quantity) of light striking the light receiving surface of the meter. For example, the light metering unit may comprise at least one element selected from the group consisting of a photo-diode, light-dependent resistor, phototube, CMOS chip, and solar cell. The light-dependent resistor may be, e.g., a cadmium sulfide resistor that can avoid the need for light intensity range selection due to non-linear response curve and has a broad spectral sensitivity, or a silicon-based resistor for particular sensitivity in the red and far-red spectrum. The light metering unit according to the invention does not include spectrometers or other devices separating and measuring spectral components of visible light, e.g. devices that can separate white light and measure individual bands of color (a spectrum). However, the light metering unit may comprise at least one optical filter and/or at least one multiple detection element, preferably at least one light color/wavelength selective photo-diode. For example, the light metering unit may comprise a photodiode or photoresistor combined with an optical filter to restrict the detector's spectral sensitivity to a desired (e.g. chemically and/or biologically active) wavelength. The light metering unit may further comprise at least one light recording device (e.g. a memory) for recording the light intensity data measured by the light metering unit. Alternatively or in addition, the light metering unit can be coupled with or connected to at least one external light recording device (e.g. an external memory) for recording the light intensity data measured by the light metering unit.

For example, the illumination means, the internal space and/or the container, and the light metering unit can be disposed in an aligned arrangement, wherein the internal space and/or the container may be positioned between the illumination means and the light metering unit. Due to this arrangement, it is ensured that the light metering unit captures the light that has passed through a transparent or partially transparent chemical and/or biological sample.

Alternatively, in relation to the illumination means, the light metering unit or a light detection assembly comprising at least two light metering units can be positioned in a roughly perpendicular angle with regard to the internal space and/or the container or in a pointed angle with regard to the internal space and/or the container, preferably <20°, more preferably <10°.

In relation to the illumination means, the light metering unit may be, for example, positioned on the opposite side (180° or nearly 180°) of the internal space and/or the container (e.g., a transparent or partially transparent sample). Alternatively or in addition, the light metering unit may be disposed in a certain angle formed between the illumination means, the chemical and/or biological sample and the light metering unit. For instance, in a roughly 90° angle arrangement the light metering unit captures light scattered sideward within the chemical and/or biological sample. Alternatively or in addition, with a pointed angle arrangement formed between the illumination means, the chemical and/or biological sample and the light metering unit, the light metering unit captures light scattered backwards within the chemical and/or biological sample. In an angle arrangement between 90° and 180° the light metering unit captures light forward scattered within the chemical and/or biological sample. These arrangements with intermediate angles will also result in the light metering unit capturing a mixture of transmitted and scattered light.

In an advantageous embodiment of the invention, the light metering unit comprises at least one light receiving surface and is designed to measure the illuminance [Lux, Ix] and/or irradiance [W/m²] of its light receiving surface. Accordingly, the intensity of the light emitted by the illumination means that has passed through and/or is scattered while passing through the chemical and/or biological sample can be determined (light exposure over time).

In a further advantageous embodiment of the invention, the device and/or the light metering unit comprises at least one light filter element. That is, the device and/or at least one light metering unit can be equipped with different filters to detect different wavelengths of light. Accordingly, the device according to the invention can measure specific wavelengths by using optical filters and/or multiple light metering units, e.g. light color/wavelength selective photo-diodes, for example, in order to measure the light intensity at a chemically, and/or biologically active wavelength.

In another advantageous embodiment of the invention, two or more illumination means are provided. For example, the illumination means may comprise two or more light emitting elements such as light emitting diodes (LEDs).

In another advantageous embodiment of the invention, the light metering unit is part of a light detection assembly comprising at least two light metering units. For example, the light detection assembly may comprise two or more photo-diodes.

In order to hold at least one chemical and/or biological sample, the device or the container may comprise two or more cavities designed to receive the sample(s).

At least one of the light metering units and at least one of the illumination means may be disposed in an aligned arrangement. For example, if two or more internal spaces or a container comprising two or more cavities are provided, each internal space or each cavity of the container can be positioned between said illumination means and said light metering unit. Such arrangement ensures that each light metering unit captures the light that has passed through the sample disposed between the aligned illumination means and said light metering unit, provided the internal space or cavity and the sample are transparent or partially transparent. Accordingly, the device according to the invention may be arranged in a way to be aligned for maximal detection of light from the principal direction of the light source used to irradiate the samples, i.e. the direction of maximal sensitivity of the light metering unit(s) is at least roughly directed towards the light source (illumination means). If the light metering units are aligned with a multi-sample container, e.g. a multiwell plate, the light metering unit can detect light exposure on a level of individual samples.

In a preferred embodiment, at least one blinding element is disposed between the aligned light metering unit and illumination means, wherein said blinding element comprises at least one aperture. As the light beams are focused and light scattering is reduced, a blinding element ensures that light is only captured from the individual light metering units aligned with the illumination means. This could be realized, for example, by something like a perforated plate, with or without a lens, provided appropriate geometries are considered.

In another advantageous embodiment of the invention, the light metering unit comprises or is coupled with at least one control element. The control element is preferably configured to control the illumination means and/or the illumination of the chemical and/or biological sample in the internal space, or to measure and/or record light exposure of the chemical and/or biological sample in the internal space, preferably in real-time. The control element may be composed of a circuitry with ability to record or process data on light exposure over time, while the light metering unit detects light exposure of the chemical and/or biological sample during the process of optogenetic control, photoactivation or photocatalysis, preferably in real-time.

In a special advantageous embodiment of the invention, the light metering unit comprises or is coupled with at least one control device for adjusting the color and/or light transmittance of a switchable element. For example, the internal space can be at least partially surrounded by at least one wall element and, except for at least one window for observing and/or illuminating the internal space, protected from the ingress of light by at least one light-proof material. The window may comprise at least one switchable element being of switchable color and/or light transmittance. That is, by the switchable element the window can be easily switched between a first state ("closed state"), wherein light is blocked off from the internal space, and at least a second state ("active state"), wherein light can pass through the window into and out of the internal space in a controlled manner. Light exposure of the chemical and/or biological sample in the internal space can be controlled by the switchable element in order to avoid unintended light exposure during "off-phases" (i.e. when illumination of the sample does not occur or when the samples are prepared, stored or transported) or tune light exposure during "on-phases" (i.e. when the sample is illuminated). The switchable element may be designed to change color and/or gain transmittance and/or transparency upon switching from a first state to a second state. The first ("closed") state allows for energy-neutral, power-off, and thus non-wired light protection during transportation or storage of the device. In the second ("active") state a user or an instrument can "open the shades" for visual inspection or electromagnetic irradiation of the chemical and/or biological sample(s) contained inside the device's internal space. Outside specific environments where controlled illumination shall occur, the window is "closed" to the ingress of light or at least to a specific chemically or biologically active wavelength to protect the chemical and/or biological material from unintended illumination, e.g. by ambient light, sunlight exposure or the like. Accordingly, such switchable element allows for easy and controlled protection of the inner space before and/or after illumination, even after disassembly of or removal from the illumination device, as well as easy and controlled observation of the inner space before, during and/or after illumination without the need to disassemble the whole device. In an advantageous embodiment, the control device may be configured to trigger such switchable element so as to control light exposure of the chemical and/or biological sample in the internal space, preferably by feedback control in real-time.

In an advantageous embodiment of the invention, the light metering unit comprises or is connected to at least one feedback control system (circuit) and/or at least one analogue control apparatus in order to detect light intensities and intensity differences of the illumination means, or between at least one illumination means and at least one standard (predefined or internal). The feedback control system and/or the analogue control apparatus can be used to regulate or adjust the intensity (e.g. number of independent light emitting sources (e.g. LEDs) powered, and/or time schedule e.g. pulse width modulation of the light emitting units and/or on/off pulsing or powering similar schedules) of the illumination means. In this embodiment, light intensities and intensity differences can be detected over time in the light generated by the illumination means and which has passed (transmitted) the chemical and/or biological sample or has been generated by light scattering in the chemical and/or biological sample, depending on the spatial arrangement of the light metering unit with respect to the illumination means and the chemical and/or biological sample. The calculated transmittance and/or light scattering within the chemical and/or biological sample can be used by the control system to adjust the intensity and/or time schedule in such a way that the effective average light exposure for any given sub-volume of the chemical and/or chemical sample is held constant even when the optical properties such as absorbance characteristics or particulate size and/or concentration, such as cell density, changes over time. In the case of a bioreactor or other cell vessel where the chemical and/or biological sample is shaken, moved, stirred or otherwise agitated, and thus continuously moved within the vessel, this emitted light intensity adjustment can ensure that every sub-volume and/or cell in the sample is exposed to a constant average light intensity over time.

For example, the device according to the invention may comprise or be a vessel, plurality of vessels, container, encasing, box, photoreactor or bioreactor for harboring chemical and/or biological samples. The device is preferably designed to have a light-proof body or other features that convey protection from light. In one preferred embodiment, the illumination means as well as the light metering units are positioned between the (light-proof) body and the vessel. In another preferred embodiment, at least one window for observing and/or illuminating the internal space can be disposed in the wall element and/or the light-proof material. The device can be combined with a switchable element that may be designed to change color and/or gain transmittance and/or transparency upon a signal delivered from an instrument that actively opens the window for optically accessing the sample(s) in the second state and closes the window in the first state. Preferably, switching is accomplished in response to electrical signals applied by the device's electronics (e.g. at least one control device). The switchable element can be part of and/or attached to a light panel of an illumination means, the container, an encasing or box wall for containing of the vessel with the chemical and/or biological sample itself (e.g. preferably on the bottom or top of a cell culture plate, a cell culture bag or a flask, or the walls of a bioreactor).

For example, the light metering unit may be capable of detecting light from a 360 degrees solid angle and/or equipped with two detection units on one plane collecting light from half spaces or near-180 solid angle coverage, thus ensuring good coverage of light from two antipodal directions. Moreover, the light metering unit can be equipped with half-globe shaped light collectors to increase sensitivity from light incidence from pointed angles formed with the plane defined by the two detection units, or equipped with six detection units on a cube-like arrangement collecting light from half spaces or near 180 solid angle coverage, thus ensuring solid 360 degrees or near 360 degrees or detection. The light metering unit may further be equipped with a detection unit that is a bioreactor and/or cell culture cabinet compatible light meter, preferably sealed or lacquered to be liquid/humidity-proof. In an advantageous embodiment, the light metering unit can be autonomous in terms of energy supply or data collection (memory), and can thus detect light independently or transmit information to an electronic device wirelessly and thus does not need wired connection. The light metering unit may be powered by an internal battery, preferably with long-life, by energy that is electromagnetically transmitted from the outside in a contact-free mode, and/or powered only by the exposure of light, e.g. the photodiode converting light into a current, thus used to detect light exposure and provide the energy to record, process or transmit data on the light exposure. The light metering unit can further be equipped with a data storage unit for wireless operation and later data transfer to another system (e.g. computer) for analysis.

The device according to the invention may comprise a plurality of independent chemical and/or biological samples in independent containers or in separate regions of one or more container(s) (e.g., wells of a multiwell plate or spots of a microarray/biochip), wherein one switchable element and/or light shutter controls the light ingress for all samples simultaneously. Preferably, a number of switchable elements lower than the number of samples control the light ingress to groups of samples. Alternatively, the same number of switchable elements control the light ingress to each sample individually.

The object is further achieved by a method for controlling an exposure of at least one chemical and/or biological sample to light as initially specified, wherein an intensity of light that has passed through or is scattered by the chemical and/or biological sample in the internal space is measured by means of at least one light metering unit measuring the light intensity at the biologically and/or chemically active wavelength. According to the invention, the intensity with which a sample is actually exposed to light, or which intensity of light is transmitted through or scattered in the sample, is measured, preferably in real-time. To this end, at least one light metering unit is preferably designed to measure the illuminance [Lux, Ix] and/or irradiance [W/m²] of its light receiving surface so that the intensity of the light that has passed through or was scattered in the chemical and/or biological sample can be determined (light exposure over time). Based on the light intensity detected by the at least one light metering unit the luminous flux [Lumen, Im] and/or radiant flux [Watt, W] of an illumination means can be adjusted and hence light ingress into and/or exposure of the sample(s) can be controlled precisely, preferably by feedback control. This way, the effects of absorbance and/or light scattering changing over time in the biological/chemical sample can be compensated by adjusting the luminous flux and/or radiant flux of an illumination means. Typically, these changes of light absorbance and/or scattering are a result of a progressing cell culture process causing an increase in viable as well as dead cell concentration. They can also be caused by changes of media composition or pH over time, as well as by media or feed additions, media and or product or cell removal in the course of the cell culture process. The illumination itself may cause photochemical or photophysical changes to the samples, that might require an adjustment of the luminous flux and/or radiant flux of an illumination means, so that the average effective light exposure of a representative sup-sample or cell, respectively, in the sample can be adjusted. For instance, if the absorbance and or scattering of the light emitted by the illumination means is increasing over time, e.g. as a consequence of the increase of cell density, the light output of the illumination means can be increased, e.g. by increasing the number of powered light emitting elements, changing the pulse width modulation parameters of the light emitting elements, or their on/off time schedule. The feedback control can be a function of a device, a container, or can be accomplished externally, e.g. by a controller of an illumination means.

Moreover, the light intensity data measured by the light metering unit can be recorded by at least one light recording device (e.g. a memory). The light recording device can be an integrated part of the light metering unit (e.g. as an internal memory) or coupled with or connected to the light metering unit (e.g. as an external memory). It is therefore an advantage of the method according to the invention that light effective exposure of the chemical and/or biological sample can be detected, recorded and analysed during the process of illumination (e.g., optogenetic control, photoactivation or photocatalysis) in real-time, so as to effectively control illumination of the sample.

In an advantageous embodiment of the method according to the invention, measuring the intensity of light comprises measuring the illuminance [Ix] and/or irradiance [W/m²] of at least one light receiving surface of the light metering unit. That is, the intensity of the light emitted by the illumination means that has passed through and/or is scattered while passing through the chemical and/or biological sample can be determined.

In another advantageous embodiment of the method according to the invention, the intensity of light is measured over time by means of at least one light recording device. The light recording device may be an integrated part of the light metering unit (e.g. as an internal memory) or coupled with or connected to the light metering unit (e.g. as an external memory) in order to allow for recording and/or documenting the intensity of light over the course of the process of illumination.

In an advantageous embodiment of the method according to the invention, at least one illumination intensity profile and/or spectral property (quality) is documented in real time by the light recording device. This can be used to record actual intensities, wavelength characteristics or light doses from intended illumination, as well as unintended light contamination that happened during the process, e.g. through exposure to ambient light or malfunction of an illumination means.

Preferably, the measured light intensity value is used to compensate or adjust the intensity of light emitted by the illumination means in real time.

For example, at least one peak wavelength variation or change in the spectrum of the illumination means is detected so as to detect aging or deterioration of the illumination means, e.g. for initiating for service or end of life-time notifications. In such embodiment, the light intensity emitted by the illumination means (e.g., luminous flux and/or radiant flux) can be adjusted automatically and/or electronically according to the detected variation or change (re-calibration). Alternatively, if aging or deterioration exceed a certain predefined value, this diagnosis can be reported back to a user of the system or a technical service.

The object is also achieved by a method for calibrating an optogenetic illumination device as initially specified, wherein at least one measured value of at least one function parameter of the illumination means is determined and compared to at least one measured value of the same function parameter of at least one other illumination means, a previously recorded value of the same illumination means, or to at least one preset and/or standard value, and wherein a difference value resulting from the comparison is determined and documented. Thus, "out of factory" differences in light output of illumination means such as light emitting elements, as well as aging of these and other sources of variation occurring over time or as a result of other manufacturing or geometric variances can be leveled out by a control system, e.g. by adjusting or offsetting individual currents and/or voltages of light emitting elements (e.g., LEDs) or by pulse width modulation. This method can be employed, for example, by at least one control system (circuit) or at least one analogue control apparatus. The control system or analogue apparatus allows for offline (during a calibration routine without samples or specimens loaded) or real-time (during a procedure when samples or specimens are illuminated) calibration, either between individual illumination means or to a preset value or standard in or independent from an illumination device. Preferably, this procedure is executed without a loaded chemical and/or biological sample or specimen and throughout the process of illumination to ensure adjustments can be made with transmittance and/or light scattering properties of the chemical and/or biological sample changing over time.

In an advantageous embodiment of this method according to the invention, determining and comparing the measured values of the function parameter is performed offline, preferably during a calibration routine without samples or specimens loaded or in real-time during a procedure when samples or specimens are illuminated or irradiated.

"Illumination" or "illuminating" as used herein refers to the irradiation of a space, object or sample with light, including but not limited to an active treatment of the space, object or sample with light or the passive exposure of the space, object or sample to light, the latter including a visual inspection or analysis of the space, object or sample.

"Light" as used herein refers to electromagnetic radiation of any wavelength, including both visible and non-visible light, gamma rays, X-rays, microwaves, and radio waves. Visible light has wavelengths in the range of 400-700 nanometers (nm), i.e. between the infrared and the ultraviolet radiation. Infrared (IR) radiation has wavelengths longer than those of visible light, extending from 700 nanometers to 1 millimeter. Ultraviolet (UV) radiation has wavelengths shorter than that of visible light but longer than X-rays, extending from 10 nm to 400 nm.

"Intensity of light" or "light intensity" is used herein as a generic term referring to an undefined (indefinite) quantity or amount of light, including any specific radiometric and photometric value (such as illuminance, irradiance, luminous flux, radiant flux, luminous exposure, and radiant exposure) defining quantities of light.

"Light effectiveness" or "effective light exposure" as used herein refers to the actual quantity or amount of light (light intensity) striking the surface of an object, cell or molecule, i.e. the actual intensity with which the object, cell or molecule is exposed to light under operating conditions.

"Color" as used herein refers to the physical property of different transmittance of a translucent material for different wavelengths of the light spectrum, thus wavelength selectivity of the translucent material, as well as to the light having passed this material and as a result having a changed wavelength spectrum as compared to the incoming light.

"Transmittance" or "light transmittance" as used herein refers to the physical property of allowing the transmission of light through a material, thus non-selectivity regarding wavelengths, acting in the same function as a neutral-density filter. "Transmittance" as used herein includes both "transparency" and "translucency". Transparency is the physical property of allowing light to pass through the material without or almost without scattering of light. Translucency (translucence) is the physical property of allowing light to pass through the material, wherein the light is scattered within or at the surfaces of the material due to a change in the index of refraction.

### Brief description of the drawings

**Figure 1** shows a schematic representation (longitudinal section) of an exemplary embodiment of a device according to the invention, wherein the device is a multi-well plate.
**Figure 2** shows a schematic representation (longitudinal section) of another exemplary embodiment of a device according to the invention, wherein a multi-well plate is disposed within the device.
**Figure 3** shows a schematic representation (longitudinal section) of a further exemplary embodiment of a device according to the invention comprising illumination means, wherein a cell culture flask is disposed within the device.
**Figure 4** shows a schematic representation (longitudinal section) of a further exemplary embodiment of a device according to the invention comprising illumination and ventilation means, wherein a multi-well plate is disposed within the device.
**Figure 5** shows a schematic representation (longitudinal section) of a further exemplary embodiment of a device according to the invention comprising illumination and ventilation means, wherein a flask or bioreactor is disposed within the device.
**Figure 6** shows a schematic representation (transversal section) of a further exemplary embodiment of a device according to the invention comprising illumination and light metering means, wherein the device is incorporated into a bioreactor.

### Description of exemplary and preferred embodiments of the invention

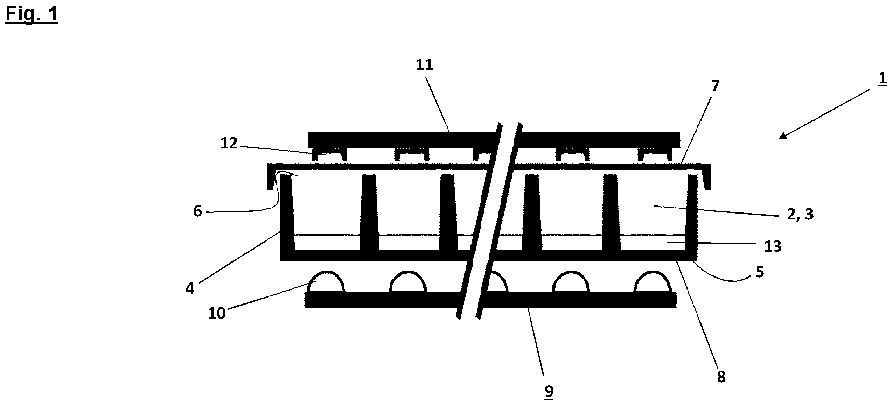

**Figure 1** shows an exemplary embodiment of a device 1 according to the invention. The device 1 comprises a multitude of cavities 2 ("wells"), each cavity 2 representing an internal space 3 being capable of holding a chemical and/or biological sample 13. The cavities 2 / internal spaces 3 are each partially surrounded by a wall element 4 which is open at the top of each internal space 3. At the bottom of each internal space 3, the wall element 4 comprises windows 5 for observing and/or illuminating the internal spaces 3. The chemical and/or biological sample(s) 13 can be introduced into the internal space(s) 3 through opening(s) 6. The openings 6 are covered by a lid 7 extending to all cavities 2. In order to protect the internal spaces 3 from the ingress of light, the wall elements 4 and the lid 7 comprise a light-proof material. Each window 5 is either permanently transparent or comprises at least one switchable element 8 being of switchable color and/or light transmittance. Each switchable element 8 can be switched between a first state ("closed state") and one or more second state(s) ("active state"). In the closed state light is blocked off from the internal space 3, while in the active state light can pass through the window 5 into and out of the internal space 3 in a controlled manner. By the switchable elements 8, light exposure of the chemical and/or biological sample 13 in the internal space 3 of each cavity 2 can thus be controlled so that unintended light exposure can be effectively avoided when illumination of the sample does not occur and/or the device 1 is stored or transported. Moreover, light exposure of the chemical and/or biological sample 13 in the internal space 3 can be tuned by the switchable element 8 when the sample is illuminated. In an advantageous embodiment of the invention, it may also be possible to observe the chemical and/or biological sample 13 in the internal space 3 through an "open" window 5 by switching the corresponding switchable element 8 from the closed to the active state. Illumination of the internal spaces 3 is employed by means of an external light bar or array 9 comprising a multitude of illumination means 10 (e.g. LEDs), each of which being disposed underneath one window 5.

In order to measure the intensity of the light passing through the internal spaces 3 holding a chemical and/or biological sample 13, a light detection assembly 11 (sensor array) comprising a multitude of light metering units 12 is disposed on the lid 7, wherein one light metering unit 12 is placed above each of the five internal spaces 3. In such embodiment, the light-proof material of the lid 7 has to be "porous", i.e. include holes or transparent (or at least partially transparent) sections underneath each light metering unit 12, so as to allow detection of light passing through the internal spaces 3 and the chemical and/or biological sample 13. The light detection assembly 11 and/or the light metering units 12 can be coupled with a control element so that the color and/or light transmittance of the switchable element 8 and/or the light bar 9 and/or the illumination means 10 can be adjusted/tuned electronically. According to the invention, the intensity with which the chemical and/or biological sample 13 in each cavity 2 is actually exposed to light can be determined and monitored in real-time. To this end, each light metering unit 12 is designed to measure the illuminance and/or irradiance of its light receiving surface so that the intensity of the light emitted by the illumination means 10 that has passed through the chemical and/or biological sample 13 can be determined. The illuminance and/or irradiance values measured by the light metering units 12 are processed and used for adjusting and/or adapting the luminous flux and/or radiant flux of the illumination means 10 in order to precisely adjust light ingress into and/or exposure of the sample(s) in real-time. Thus, the light metering units 12 detect light exposure of the chemical and/or biological sample(s) 13 during the process of illumination (e.g., optogenetic control, photoactivation or photocatalysis) in real-time, so as to effectively control illumination of the sample(s).

In order to ensure that each light metering unit 12 captures the light that has passed through the chemical and/or biological sample 13 in each cavity 2, the illumination means 10, the internal spaces 3, and the light metering units 12 are disposed in an aligned arrangement such that each internal space 3 / cavity 2 is positioned between one illumination means 10 and one light metering unit 12.

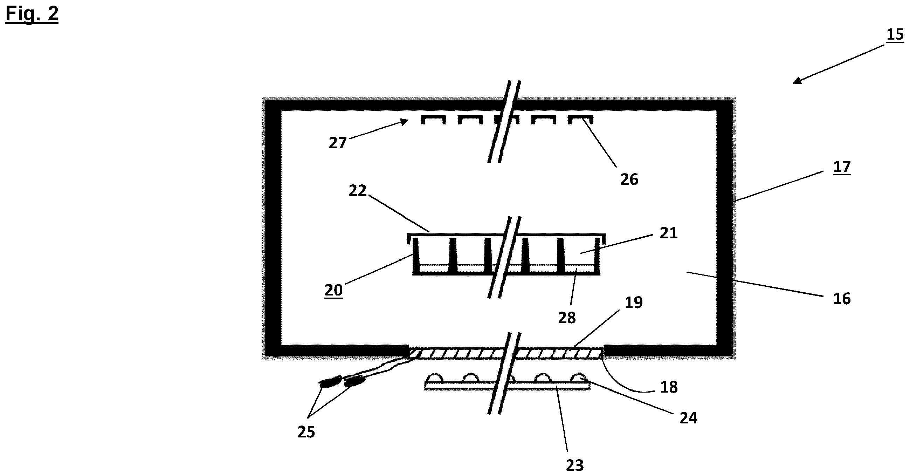

**Figure 2** shows another exemplary embodiment of a device 15 according to the invention. The device 15 comprises an internal space 16 which is surrounded by a wall element 17 comprising a light-proof material that protects the internal space 16 from the ingress of light. At the bottom of the device 15, the wall element 17 further comprises a window 18 for observing and/or illuminating the internal space 16. The window 18 comprises a switchable element 19 being of switchable color and/or light transmittance. For example, the switchable element 19 may be an LCD panel or the like. The switchable element 19 can be switched between a first state ("closed state") and one or more second state(s) ("active state"). In the closed state light is blocked off from the internal space 16, while in the active state light can pass through the window 18 into and out of the internal space 16 in a controlled manner.

A container 20 is placed within the internal space 16 of the device 15. The container 20 is designed to hold at least one chemical and/or biological sample 28, for example, a suspension or liquid including living cells. The container 20 may be a standard cell culture vessel comprising a plurality of cavities 21 ("wells"), for example, a 6-, 12-, 24- or 96-well plate. The cavities 21 of the container 20 are covered by a lid 22. In order to allow ingress of light into the cavities, the container 20 comprises a transparent or at least partially transparent material. By the switchable element 19, light exposure of the chemical and/or biological samples 28 (cells) in the cavities 21 of the container 20 can be controlled so that unintended light exposure can be effectively avoided when illumination of the inner space 16 does not occur and/or the device 15 is stored or transported. Moreover, light exposure of the chemical and/or biological sample(s) 28 in the container 20 can be tuned by the switchable element 19 when the inner space 16 is illuminated from the outside. In an advantageous embodiment of the invention, it may also be possible to observe the cells in the container 20 through the window 18 by switching the switchable element 19 from the closed to the active state. Illumination of the internal space 16 is employed by means of an external light source, bar or array 23 comprising at least one of illumination means 24 (e.g. LEDs) that are disposed underneath the switchable element 19. The switchable element 19 is coupled to an electronic control unit (not shown) via contact elements 25 so that it can be easily switched between the closed and the active state. If the switchable element 19 comprises an electrochromic material, electrical currents can be applied to the material via the contact elements 25 to induce the desired state transitions.

In order to measure the intensity of the light passing through the internal space 16, at least one light metering unit 26 is attached to the underside of the top of the wall element 17 within the internal space 16. Either one single light metering unit 26 or, as depicted here, a light detection assembly 27 (sensor array) comprising a multitude of light metering units 26 is provided. In this embodiment, the lid 22 may comprise a transparent or at least partially transparent material or at least has to be "porous", i.e. include holes underneath each light metering unit 26, so as to allow detection of light passing through the cavities 21 and the chemical and/or biological sample 28. The light detection assembly 27 and/or the light metering units 26 can be coupled with a control element so that the color and/or light transmittance of the switchable element 19 and/or the light bar 23 and/or the illumination means 24 can be adjusted/tuned electronically. According to the invention, the intensity with which the chemical and/or biological sample 28 in each cavity 21 is actually exposed to light can be determined and monitored in real-time. To this end, each light metering unit 26 is designed to measure the illuminance and/or irradiance of its light receiving surface so that the intensity of the light emitted by the illumination means 24 that has passed through the chemical and/or biological sample 28 can be determined. The illuminance and/or irradiance values measured by the light metering units 26 are processed and used for adjusting and/or adapting the luminous flux and/or radiant flux of the illumination means 24 in order to precisely adjust light ingress into and/or exposure of the sample(s) 28 in real-time. Thus, the light metering units 26 detect light exposure of the chemical and/or biological sample(s) during the process of illumination (e.g., optogenetic control, photoactivation or photocatalysis) in real-time, so as to effectively control illumination of the sample(s) 28. In order to ensured that each light metering unit 26 captures the light that has passed through the chemical and/or biological sample 28 in each cavity 21, the illumination means 24, the cavities 21, and the light metering units 26 are disposed in an aligned arrangement such that each cavity 21 is positioned between the illumination means 24 and one light metering unit 26.

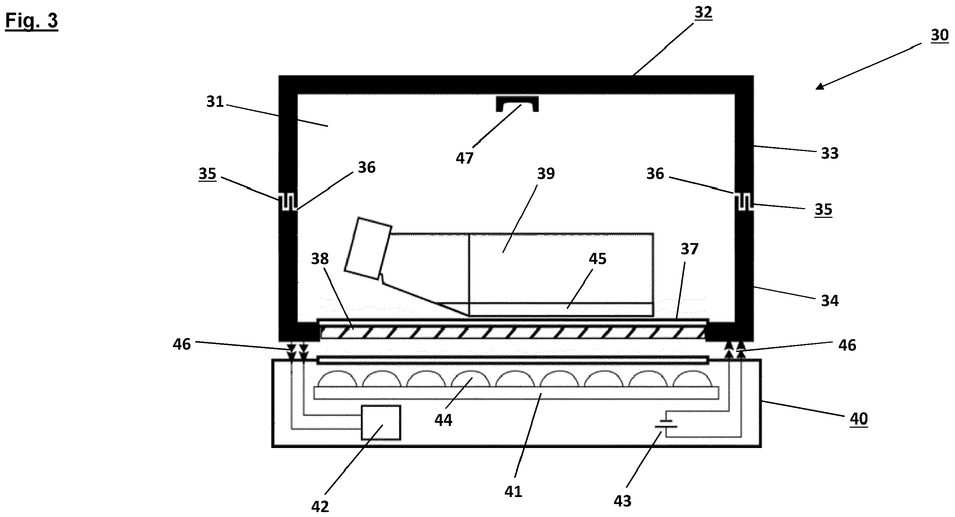

**Figure 3** shows a further exemplary embodiment of a device 30 according to the invention. The device 30 comprises an internal space 31 which is surrounded by a wall element 32 comprising a light-proof material that protects the internal space 31 from the ingress of light. In this advantageous embodiment, the wall element 32 includes two parts 33, 34 that are attached to each other by at least one interlockable connecting structure 35 comprising a light-tight but gas-permeable opening 36 permitting ventilation of the internal space 31 without allowing light from the outside to enter the internal space 31. In this embodiment, the opening 36 is a meander-shaped channel. At the bottom of the device 30, the wall element 32 further comprises a window 37 for observing and/or illuminating the internal space 31. The window 37 comprises a switchable element 38 being of switchable color and/or light transmittance. For example, the switchable element 38 may be an LCD panel or the like. The switchable element 38 can be switched between a first state ("closed state") and one or more second state(s) ("active state"). In the closed state light is blocked off from the internal space 31, while in the active state light can pass through the window 37 into and out of the internal space 31 in a controlled manner.

A container 39 is placed within the internal space 31 of the device 30. The container 39 is designed to hold at least one chemical and/or biological sample 45, for example, a suspension or liquid including living cells. The container 39 may be a standard cell culture flask at least partially being made of a transparent or at least partially transparent material. By the switchable element 38, light exposure of the chemical and/or biological sample 45 (cells) in the container 39 can be controlled so that unintended light exposure can be effectively avoided when illumination of the inner space 31 does not occur and/or the device 30 is stored or transported. Moreover, light exposure of the chemical and/or biological sample 45 in the container 39 can be tuned by the switchable element 38 when the inner space 31 is illuminated from the outside. In an advantageous embodiment of the invention, it may also be possible to observe the cells in the container 39 through the window 37 by switching the switchable element 38 from the closed to the active state. The device 30 is coupled to an external illumination unit 40 comprising a light source, bar or array 41, a control element 42, and a power source 43. The light bar 41 comprises a plurality of illumination means 44 (e.g. LEDs) that are disposed underneath the switchable element 38 for illuminating the internal space 31. In this embodiment electrical connections between the external illumination unit 40 and the device 30 are established through at least one electrical contact unit 46 with at least two lines establishing electrical contacts, e.g. encompassing spring contacts or at least one fitting pair of plug and socket. This ensures electrical energy supply from the power source 43 to elements installed in the device 30, such as the light metering unit 47 or a fan for inner space ventilation (not shown in figure 3). Additionally, electrical signals can be transferred from the light metering unit 47 or other sensors to the control element 42, or signals can be transferred from the control unit 42 to the switchable element 38. In this embodiment, the electrical contact unit(s) 46 allow for easily reversible removal of the upper part of the device 30 from the external illumination unit 40, in the sense that the external illumination unit 40 serves as a docking station for the device 30 representing a transportable light protection and illumination chamber.

In order to measure and record the intensity of the light passing through the internal space 31 and thus through the container 39 and the chemical and/or biological sample 45 (e.g., cell suspension or medium with cells growing adherent to the wall of the container 39) contained therein, a light metering unit 47 is attached to the underside of the top of the upper part 33 of the wall element 32 within the internal space 31. The switchable element 38 and/or the illumination means 44 can be controlled by the control element 42, while information of the light metering unit 47 can be used by the control element 42 to determine the status of the switchable element 38 and/or the illumination means 44. The light metering unit 47 measures light exposure of the chemical and/or biological sample 45 during the process of illumination (e.g., optogenetic control, photoactivation or photocatalysis) in real-time and is thus capable of effectively controlling illumination of the sample 45 by providing light intensity data to the control element 42.

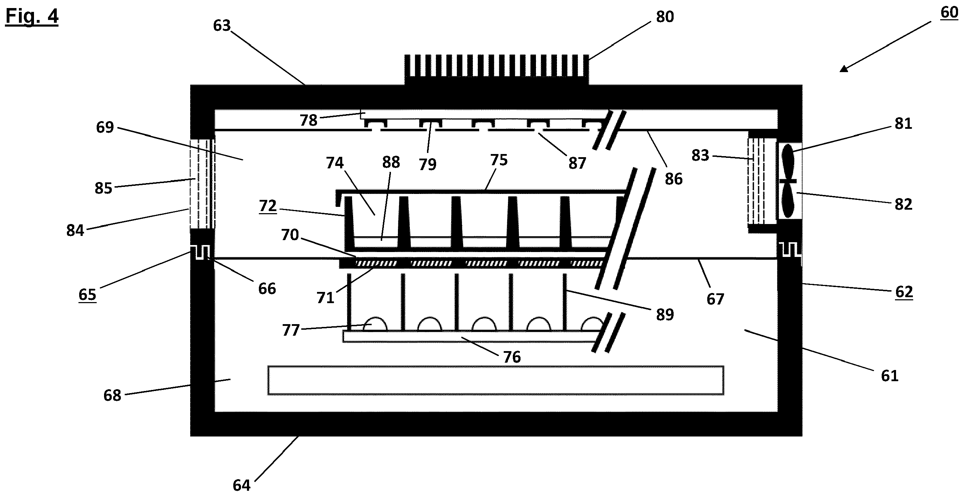

**Figure 4** shows a further exemplary embodiment of a device 60 according to the invention. The device 60 comprises an internal space 61 which is surrounded by a wall element 62 comprising a light-proof material that protects the internal space 61 from the ingress of light. In this advantageous embodiment, the wall element 62 includes two parts 63, 64 that are attached to each other by at least one interlockable connecting structure 65 comprising a light-tight but gas-permeable opening 66 permitting passive ventilation of the internal space 61 without allowing light from the outside to enter the internal space 61. In this embodiment, the opening 66 is a meander-shaped channel. A separating plate 67 is disposed within the internal space 61, dividing the internal space 61 into a lower internal space 68 and an upper internal space 69. The separating plate 67 is made of a light-proof material and comprises (at least one) or several windows 70 for observing and/or illuminating the upper internal space 69. The windows 70 each comprise a switchable element 71 being of switchable color and/or light transmittance, which is disposed underneath or in openings in the separating plate 67 in the lower internal space 68. For example, each switchable element 71 may comprise an optics layer comprising an electrochromic material (e.g. tungsten trioxide) wherein redox reactions convert non-absorbing molecules into light absorbing states and vice versa. Electrical currents can be applied to the material to induce these transitions, but are not required to maintain the status of the material. They thus have a memory effect. Accordingly, each switchable element 71 is equipped with an electrochromic optics layer that can be independently switched between an opaque and a clear state by applying a lower voltage. In the opaque state light is blocked off from the upper internal space 69, while in the clear state light can pass through the windows 70 into and out of the upper internal space 69 in a controlled manner.

A container 72 is placed on the separating plate 67 within the upper internal space 69 of the device 60. The container 72 is designed to hold at least one chemical and/or biological sample 88, for example, a suspension or liquid including living cells. The container 72 may be a standard cell culture vessel comprising a plurality of cavities 74 ("wells"), for example, a 24- or 96-well plate. The cavities 74 of the container 72 are covered by a lid 75. Illumination of the upper internal space 69 is employed by means of an internal light source assembly, bar or array 76 comprising a plurality of illumination means 77 (e.g. LEDs). The internal light source assembly 76 is disposed underneath the switchable elements 71 within the lower internal space 68, wherein the illumination means 77 are aligned underneath the windows 70. In an advantageous embodiment of the invention, the illumination means 77 are optically separated from each other by wall elements 89 that prevent ingress of light into a window 70 from an illumination means 77 that is not aligned. This way, cross-illumination and thus independent illumination of each cavity 74 and each chemical and/or biological sample 88 in the container 72 through only one illumination means 77 can be ensured. Light exposure of the chemical and/or biological samples (cells) 88 in each cavity 74 of the container 72 can be tuned independently by the corresponding switchable element 71 when the upper inner space 69 is illuminated by the illumination means 77. In an advantageous embodiment of the invention, it may also be possible to observe the cells in the container 72 through the windows 70 via at least one camera (not shown) by switching the switchable elements 71 from the opaque to the clear state.

In order to measure the intensity of the light passing through the upper internal space 69, a light detection assembly 78 (sensor array) comprising several light metering units 79 are attached to the underside of the top of the upper part 63 of the wall element 62 within the upper internal space 69. A blinding element 86 is disposed between the light detection bar 78 and the illumination means 77 and thus the container 72, wherein said blinding element 86 comprises several apertures 87. Accordingly, the blinding element 86 is a kind of perforated plate allowing light to pass through the apertures 87. As the light beams are focused and light scattering is reduced at the apertures 87, the blinding element 86 ensures that light is only captured by the individual light metering units 79 aligned with each cavity 74 of the container 72 and each illumination means 77.

The device 60 further comprises a cooling unit 80 for passive or active cooling of the inner space 61 and a fan 81 for active ventilation of the upper internal space 69. The cooling unit 80 is disposed on the top of the upper part 63 of the wall element 62 at the outside of the device 60. The cooling unit 80 can comprise a heat sink for passive cooling, e.g. a metal body with cooling fins, or an active cooling assembly, such as a thermoelectric element connected to the upper wall element 63 or lower wall element 64 on one side and a heat sink on the other side. In an additional embodiment it can be connected to a water-based cooling system (not shown). The cooling unit allows for maintaining a preferable temperature inside the upper internal space 69 and prevent uncontrolled overheating caused by heat sources, such as the light source assembly 76, which are inside or connected to the device 50. The fan 81 is arranged in a first ventilation opening 82 which is covered within the upper internal space 69 by a wind-permeable first filter element 83 being designed to avoid contamination of the internal space 61. At least one of the fan 81 and the filter element 83 is light-tight so as to protect the internal space 61 from the ingress of light. For pressure compensation, a second ventilation opening 84 is disposed opposite to the first ventilation opening 82. The second ventilation opening 84 is equipped with a light-tight but wind-permeable second filter element 85 being designed to avoid contamination of the internal space 61 as well. The active ventilation system allows for maintaining optimal conditions for, e.g., cultivating living cells, within the upper internal space 69, e.g. when the device 60 is positioned in a cell culture incubator providing an atmospheric environment controlled for its gas composition, temperature and humidity.

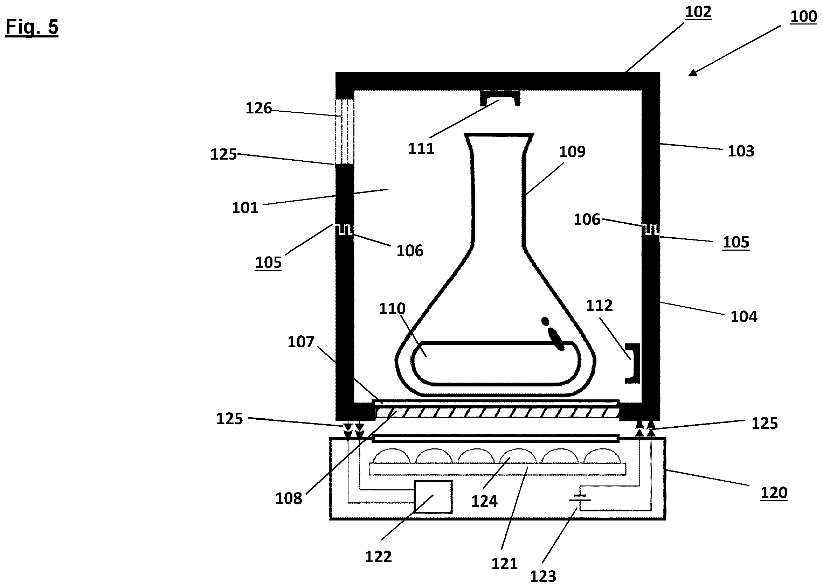

**Figure 5** shows a further exemplary embodiment of a device 100 according to the invention. The device 100 comprises an internal space 101 which is surrounded by a wall element 102 comprising a light-proof material that protects the internal space 101 from the ingress of light. In this advantageous embodiment, the wall element 102 includes two parts 103, 104 that are attached to each other by at least one interlockable connecting structure 105 comprising a light-tight but gas-permeable opening 106 permitting ventilation of the internal space 101 without allowing light from the outside to enter the internal space 101. In this embodiment, the opening 106 is a meander-shaped channel. At the bottom of the device 100, the wall element 102 further comprises a window 107 for observing and/or illuminating the internal space 101. The window 107 comprises a switchable element 108 being of switchable color and/or light transmittance. For example, the switchable element 108 may be an LCD panel or the like. The switchable element 108 can be switched between a first state ("closed state") and one or more second state(s) ("active state"). In the closed state light is blocked off from the internal space 101, while in the active state light can pass through the window 107 into and out of the internal space 101 in a controlled manner.

A container 109 is placed within the internal space 101 of the device 100. The container 109 is designed to hold at least one chemical and/or biological sample 110, for example, a suspension or liquid including living cells. The container 109 may be a standard cell culture flask or a bioreactor, at least partially being made of a transparent or at least partially transparent material. By the switchable element 108, light exposure of the chemical and/or biological sample 110 (cells) in the container 109 can be controlled so that unintended light exposure can be effectively avoided when illumination of the inner space 101 does not occur and/or the device 100 is stored or transported. Moreover, light exposure of the chemical and/or biological sample 110 in the container 109 can be tuned by the switchable element 108 when the inner space 101 is illuminated from the outside. In an advantageous embodiment of the invention, it may also be possible to observe the cells in the container 109 through the window 107 by switching the switchable element 108 from the closed to the active state. The device 100 is coupled to an external illumination unit 120 comprising a light source, bar or array 121, a control element 122, and a power source 123. The light source assembly 121 comprises a plurality of light emitting elements 124 (e.g. LEDs) that are disposed underneath the switchable element 108 for illuminating the internal space 101. In this embodiment electrical connections between the external illumination unit 120 and the device 100 are established through contact points 125 with at least two lines, e.g. encompassing spring contacts or a fitting pair of plug and socket.

In order to measure and record the intensity of the light passing through the internal space 101 and thus through the container 109 and the chemical and/or biological sample 110 (e.g., cell suspension or medium with cells growing adherent to the wall of the container 109) contained therein, a light metering unit 111 is attached to the underside of the top of the upper part 103 of the wall element 102 within the internal space 101. A second light metering unit 112 is attached to the wall element 102 in a configuration that it measures light scattering in a direction perpendicular to the direction of the light emitted by the light source assembly 121. The switchable element 108 and/or the illumination means 124 can be controlled by the control element 122, while information of the light metering units 111 and/or 112 can be used by the control element 122 to determine the status of the switchable element 108 and/or the illumination means 124. The light metering units 111 and/or 112 measure light exposure of the chemical and/or biological sample 45 as well as it's optical characteristics that alter light penetration of the chemical and/or biological sample itself during the process of illumination (e.g., optogenetic control, photoactivation or photocatalysis) in real-time. The control element 122 can receive and process this data and is capable using this information to effectively control the illumination means 124 and thus illumination of the sample 110.

The device 100 further comprises a ventilation opening 125 that is equipped with a light-tight but wind-permeable filter element 126 being designed to avoid contamination of the internal space 101. This passive ventilation system allows for maintaining optimal conditions for, e.g., cultivating living cells, within the internal space 101 and/or the container 109, e.g. when the device 100 is positioned in a cell culture incubator providing an atmospheric environment controlled for its gas composition, temperature and/or humidity.

The device 110 can be installed on a shaker (not shown) to allow agitation of the chemical and/or biological sample 110 within the container 109 (e.g. shaker flask). Alternatively, the device 110 can provide means to connect the container 109 or the inner space 101 to external supplies or additional measurement means, such as media feed lines, connections to biochemical or physical sensors (not shown).

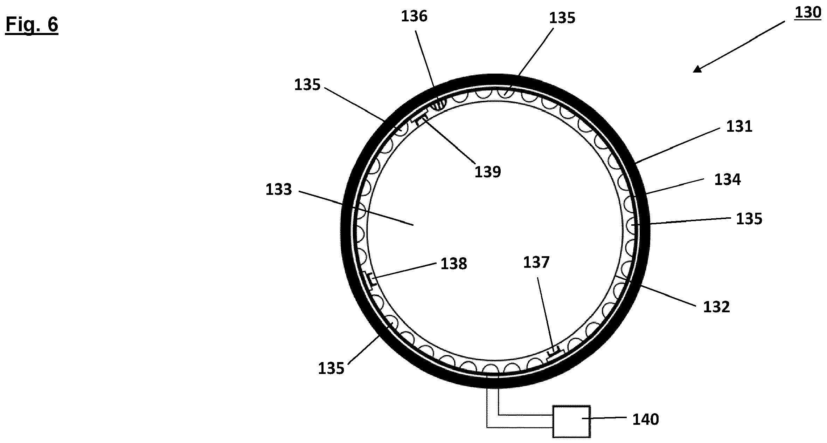

**Figure 6** shows a further exemplary embodiment of a device 130 according to the invention. The device 130 comprises a carrier 134 that is equipped with light emitting elements 135 to illuminate an internal space 133 that can contain a vessel, liner or bag 132 for containing a biological or chemical sample, e.g. cultured cells in a medium. The carrier 134 is further surrounded and held by a light-proof containment 131, e.g. a bioreactor steel tank which prevents external light ingress and holds the carrier 134. The carrier 134 can be a mechanically flexible to assume the geometry formed between the light-proof containment 131 and the vessel, liner or bag 132, and/or be attached to the light-proof containment 131. The carrier 134 can also consist of several panels connected to each other though hinges, so that the carrier can be adjusted to the curvature of the inner wall of the light-proof containment 131. The carrier 134 is furthermore equipped with light metering units 137,138, 139 arranged in a certain angle towards a light emitting element 136 controlled independently from the other light emitting elements 135. In this example, the light metering unit 137 is arranged in a roughly 180° angle formed between the light emitting element 136 the center of the internal space 133 and the light metering unit 137. The light metering unit 137 can be used to preliminarily measure the transmittance of light emitted by the light emitting element 136 and passing through the internal space 133. Another light metering unit 138 is arranged in a roughly 90° angle formed between the light emitting element 136 the center of the internal space 133 and the light metering unit 138. The light metering unit 138 can be used to preliminarily measure the sideward scattering of light emitted by the light emitting element 136 and passing through the internal space 133. A third light metering unit 139 is arranged in a very small (preferentially <20°) angle formed between the light emitting element 136 the center of the internal space 133 and the light metering unit 139. The light metering unit 139 can be used to preliminarily measure the backward scattering of light emitted by the light emitting element 136 and passing through the internal space 133.

The device 130 is coupled to an external control element 140, equipped with a power source (not shown) to receive the data from the light metering units 137, 138, 139 and process the data to control the light output of the light emitting elements 135. The light emitting elements 135 and/or 136 can be controlled by the control element 140, while information of the light metering units 137 and/or 138 and/or 139 can be used by the control element 140 to determine the status of light emitting elements 135 and/or 136. The light metering units 137 and/or 138 and/or 139 measure light exposure, more specifically transmission and/or scattering, of the chemical and/or biological sample inside the internal space 133 and the vessel, liner or bag 132 as well as it's optical characteristics that alter light penetration of the chemical and/or biological sample itself during the process of illumination (e.g., optogenetic control, photoactivation or photocatalysis) in real-time. The control element 140 can receive and process this data and is capable of using this data to effectively control the light emitting elements 135, 136 and thus illumination of the sample inside the internal space 133 and the vessel, liner or bag 132.

### References:

1. Anonym: Method of the Year 2010, Nature Methods VOL. 8 NO. 1, JANUARY 2011, 1-1, published online 20 December 2010, doi:10.1038/nmeth.f.321.
2. Nicole A. Repina, Alyssa Rosenbloom, Abhirup Mukherjee, David V. Schaffer & Ravi S. Kane: AT LIGHT SPEED: Advances in Optogenetic Systems for Regulating Cell Signaling and Behavior, Annu Rev Chem Biomol Eng. 2017 June 07; 8: 13-39. doi:10.1146/annurevchembioeng-060816-101254
3. Evan J. Olson, Lucas A. Hartsough, Brian P. Landry, Raghav Shroff & Jeffrey J. Tabor: Characterizing bacterial gene circuit dynamics with optically programmed gene expression signals, Nature Methods VOL.11 NO.4, APRIL 2014, 449.
4. Karl P. Gerhardt, Evan J. Olson, Sebastian M. Castillo-Hair, Lucas A. Hartsough, Brian P. Landry, Felix Ekness, Rayka Yokoo, Eric J. Gomez, Prabha Ramakrishnan, Junghae Suh, David F. Savage & Jeffrey J. Tabor: An open-hardware platform for optogenetics and photobiology, Scientific Reports 6:35363, DOI: 10.1038/srep35363.
5. Evan M. Zhao, Yanfei Zhang, Justin Mehl, Helen Park, Makoto A. Lalwani, Jared E. Toettcher, Jose L. Avalos: Optogenetic regulation of engineered cellular metabolism for microbial chemical production, Nature 555, March 2018, 683-687, DIO 10.1038/nature26141
6. Harrison Steel, Robert Habgood, Ciaran Kelly, Antonis Papachristodoulou, Chi.Bio: An open-source automated experimental platform for biological science research, doi: https://doi.oro/10.1101/796516
7. Brandon G. Wong, Christopher P. Mancuso, Szilvia Kiriakov, Caleb J. Bashor, Ahmad S. Khalil, Precise, automated control of conditions for high-throughput growth of yeast and bacteria with eVOLVER, Nat Biotechnol. 2018 August; 36(7): 614-623. doi:10.1038/nbt.415

## Claims

1. Device (1, 15, 30, 60, 100, 130) comprising at least one internal space (3, 16, 31, 61, 101, 133) which is designed to hold at least one chemical and/or biological sample (13, 28, 45, 88, 110) or which is designed to comprise at least one container (20, 39, 72, 109, 132) designed to hold at least one chemical and/or biological sample (13, 28, 45, 88, 110), and at least one illumination means (10, 24, 44, 77, 124, 135, 136) for illuminating the chemical and/or biological sample (13, 28, 45, 88, 110) in the internal space (3, 16, 31, 61, 101, 133), **characterized in that** the device further comprises or is provided with at least one light metering unit (12, 26, 47, 79, 111, 112, 137, 138, 139) being designed to measure an intensity of light that has passed through and/or is scattered by the chemical and/or biological sample (13, 28, 45, 88, 110) in the internal space (3, 16, 31, 61, 101, 133).

2. Device according to claim 1, **characterized in that** the light metering unit (12, 26, 47, 79, 111, 112, 137, 138, 139) comprises at least one light receiving surface and is designed to measure the illuminance [Ix] and/or irradiance [W/m²] of its light receiving surface.

3. Device according to claim 1 or 2, **characterized in that** the device (1, 15, 30, 60, 100, 130) and/or the light metering unit (12, 26, 47, 79, 111, 112, 137, 138, 139) comprises at least one light filter element.

4. Device according to claim 1, 2 or 3, **characterized in that** two or more illumination means (10, 24, 44, 77, 124, 135, 136) are provided.

5. Device according to any one of claims 1 to 4, **characterized in that** the light metering unit (12, 26, 79) is part of a light detection assembly (11, 27, 78) comprising at least two light metering units (12, 26, 79).

6. Device according to any one of claims 1 to 5, wherein the device (1) or the container (20, 72) comprises two or more cavities (2, 21, 74) designed to hold the at least one chemical and/or biological sample (13, 28, 88).

7. Device according to claim 4 and 5, **characterized in that** at least one of the light metering units (12, 26, 79) and at least one of the illumination means (10, 24, 77) are disposed in an aligned arrangement.

8. Device according to claim 7, **characterized in that** at least one blinding element (86) is disposed between the aligned light metering unit (12, 26, 79) and illumination means (10, 24, 77), wherein said blinding element (86) comprises at least one aperture (87).

9. Device according to any one of claims 1 to 8, **characterized in that** the light metering unit (47, 111, 112, 137, 138, 139) comprises or is coupled with at least one control element (42, 122, 140).

10. Device according to any one of claims 1 to 9, wherein the light metering unit (12, 26, 47, 79, 111, 112, 137, 138, 139) comprises or is connected to at least one feedback control system and/or at least one analogue control apparatus.

11. Method for controlling an exposure of at least one chemical and/or biological sample to light, wherein the sample is arranged in an internal space of an illumination device and illuminated by at least one illumination means emitting light comprising at least one biologically and/or chemically active wavelength, **characterized in that** an intensity of light that has passed through or is scattered by the chemical and/or biological sample in the internal space is measured by means of at least one light metering unit measuring the light intensity at the biologically and/or chemically active wavelength.

12. Method according to claim 11, wherein measuring the intensity of light comprises measuring the illuminance [Ix] and/or irradiance [W/m²] of at least one light receiving surface of the light metering unit.

13. Method according to claim 11 or 12, wherein the intensity of light is measured over time by means of at least one light recording device.

14. Method according to claim 13, wherein at least one illumination intensity profile and/or spectral property is documented in real time by the light recording device.

15. Method for calibrating an optogenetic illumination device comprising at least one illumination means, **characterized in that** at least one measured value of at least one function parameter of the illumination means is determined and compared to at least one measured value of the same function parameter of at least one other illumination means, a previously recorded value of the same illumination means, or to at least one preset and/or standard value, and wherein a difference value resulting from the comparison is determined and documented.
